(19) Europäisches Patentamt
European Patent Office
Office européen des brevets

(11) **EP 1 849 693 B1**

(12) **EUROPEAN PATENT SPECIFICATION**

(45) Date of publication and mention
of the grant of the patent:
**05.08.2009 Bulletin 2009/32**

(51) Int Cl.:
***B62J 6/06*** *(2006.01)*

(21) Application number: **06025728.4**

(22) Date of filing: **12.12.2006**

(54) **Bicycle overvoltage protection device**

Überspannungsschutzvorrichtung für ein Fahrrad

Mise à l'échelle de polarisation de couple d'un côté sur l'autre afin d'améliorer la dérive dans une transmission à quatre roues motrices programmable

(84) Designated Contracting States:
**DE NL**

(30) Priority: **28.04.2006 JP 2006126228**

(43) Date of publication of application:
**31.10.2007 Bulletin 2007/44**

(73) Proprietor: **Shimano, Inc.**
**Osaka 590-8577 (JP)**

(72) Inventor: **Kitamura, Satoshi**
**Sakai City**
**Osaka 590-8577 (JP)**

(74) Representative: **Hofmann, Harald et al**
**Sonnenberg Fortmann**
**Patent- & Rechtsanwälte**
**Postfach 33 08 65**
**80068 München (DE)**

(56) References cited:
**EP-A2- 1 475 298**        **DE-A1- 10 111 904**

EP 1 849 693 B1

## Description

BACKGROUND OF THE INVENTION

Field of the Invention

Description of the Related Art

A headlight and a tail light are mounted to a bicycle as lighting devices. The headlight has been often lighted by electric power supplied by a dynamo. A voltage generated by the dynamo generally increases in proportion to a speed of the bicycle (a wheel rotation speed). At high speed and when the lighting devices are extinguished, the voltage generated between dynamo terminals sometimes exceeds 100 V. Therefore, for lighting a lighting device with a voltage generated by a dynamo, the lighting device must be designed to endure such a high voltage. However, components or the like that can endure a high voltage reduce versatility and increases costs.

Accordingly, in order to use a general-use electric bulb and protect the electric bulb from an extremely high voltage, an overvoltage protection device having a circuit or the like that clamps a voltage is required. Providing an overvoltage protection device having a current modulator, a voltage clamp circuit, or the like has been known in order to prevent troubles such as burnout of the headlight due to overvoltage from the dynamo (See, p. 75, Dealer Sales Manual, published by Shimano Bicycle Components in September 1996). This conventional overvoltage protection device is provided in a switch unit connected to a hub dynamo. With the switch unit having the conventional overvoltage protection device, when the headlight, a tail light, and other electric devices are connected in parallel and operated by electric power from the hub dynamo, a voltage supplied to the tail light or other electric devices does not increase to a predetermined value or higher even if the headlight burns out. This can prevent breakage and reduction in the life of the tail light and other electric devices.

In a general conventional overvoltage protection circuit, a bidirectional voltage clamp circuit is used having two Zener diodes connected in parallel with a dynamo. In the bidirectional voltage clamp circuit, a positive diode of the dynamo functions as a basic Zener diode to clamp a voltage to a predetermined value or lower, while a negative diode functions as a rectifier diode.

An example of the use of a zener diode to clamp a voltage to a predetermined value is disclosed in the document DE-U-9118797, accordingly to the preamble of claim 1.

SUMMARY OF THE INVENTION

The conventional configuration can prevent overvoltage applied to the tail light or other electrical devices when the headlight burns out. When the headlight burns out and is not immediately changed, however, the bicycle must travel without the headlight being lighted, thereby reducing recognition of the traveling bicycle from other persons.

An object of the present invention is to prevent reduction in recognition of a bicycle from other persons even if a headlight cannot be lighted.

A bicycle overvoltage protection device according to the invention 1 includes: a voltage clamp circuit; a switch circuit; and a lighting portion. The voltage clamp circuit clamps a voltage generated by a bicycle dynamo that supplies electric power to a headlight of a bicycle to a first voltage. The switch circuit is turned on when a voltage equal to or higher than the first voltage is supplied to the voltage clamp circuit. The lighting portion is connected in parallel with the voltage clamp circuit, and lighted when the switch circuit is turned on.

In the overvoltage protection device, even if the headlight burns out or the bicycle travels at high speed to cause overvoltage from the dynamo, the voltage clamp circuit clamps the voltage to the first voltage and supplies the voltage to a load such as a tail light. When the voltage clamp circuit clamps the voltage generated by the dynamo, the switch circuit is turned on to light the lighting portion. When the voltage from the dynamo increases and the voltage clamp circuit operates, the lighting portion is lighted even if the headlight bums out, thereby preventing reduction in recognition of the bicycle from other persons.

In the overvoltage protection device for the bicycle according to the invention 2, the lighting portion is a light emitting diode in the device according to the invention 1. In this case, the light emitting diode that does not burn out is used as the lighting portion, thereby reliably preventing reduction in recognition of the bicycle even if the headlight burns out.

In the overvoltage protection device for bicycle according to the invention 3, the first voltage is 7 to 12 volt in the device according to the invention 1 or 2. In this case, the first voltage that is a clamp voltage is low, and there is no need to design electric devices such as the headlight and the tail light to endure a high voltage. Thus, inexpensive general-use electric devices may be used.

In the overvoltage protection device for bicycle according to the invention 4, the voltage clamp circuit includes a rectifier circuit that rectifies an alternating current from the dynamo, and a plurality of diodes connected in series with a positive terminal and a negative terminal of the rectifier circuit in the device according to any one of the inventions 1 to 3. In this case, the rectified electric power is clamped by the plurality of diodes connected in series, and thus the clamp voltage can be freely set according to the number of diodes, the value of a forward voltage, or the like.

In the overvoltage protection device for bicycle according to the invention 5, the switch circuit is connected to a specific node of the plurality of diodes in the device according to the invention 4. In this case, an appropriate node may be selected according to a switch operating voltage of the switch circuit.

In the overvoltage protection device for bicycle according to the invention 6, the switch circuit includes a transistor having a base connected to the specific node, an emitter connected to a lighting element, and a collector connected to a negative terminal of the rectifier circuit in the device according to the invention 5. In this case, the switch circuit can be configured by the transistor with a simple configuration.

According to the present invention, when the voltage from the dynamo increases and the voltage clamp circuit operates, the lighting portion is lighted even if the headlight burns out, thereby preventing reduction in recognition of the bicycle from other persons.

BRIEF DESCRIPTION OF THE DRAWINGS

FIG. 1 is a block diagram showing a configuration of a bicycle lighting system using an embodiment of the present invention;

FIG. 2 is a block diagram showing a configuration of a bicycle overvoltage protection circuit according to the embodiment of the present invention; and

FIG. 3 is a schematic circuit diagram thereof.

Description of Symbols

| | |
|---|---|
| 41 | headlight |
| 43 | overvoltage protection circuit (an example of an overvoltage protection device) |
| 50 | voltage clamp circuit |
| 51 | switch circuit |
| 52 | auxiliary lamp (an example of a lighting portion) |
| 55 | rectifier circuit |
| 56 | diode circuit |
| D1 to D12 | diode |
| T1 | transistor |

DETAILED DESCRIPTION OF THE PREFERRED EMBODIMENTS

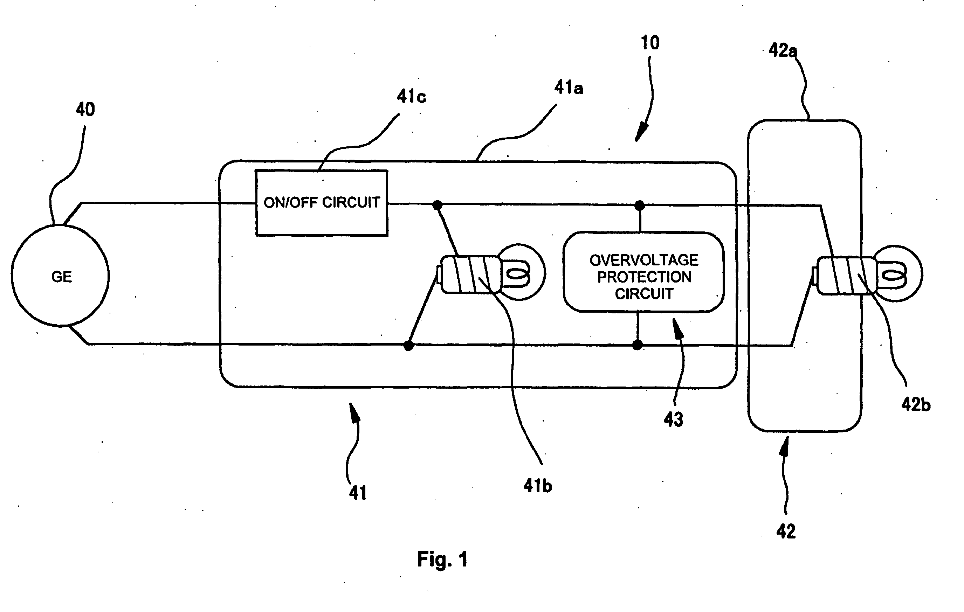

In FIG. 1, a bicycle lighting system 10 using an embodiment of the present invention includes a hub dynamo 40 provided on, for example, a hub shaft of a bicycle, a headlight 41, a tail light 42, and an overvoltage protection circuit (an example of an overvoltage protection device according to the present invention) 43 that prevents overvoltage in the lighting system 10. The hub dynamo 40 supplies electric power to the headlight 41 and the tail light 42 of the bicycle. The headlight 41 has

a lamp case 41a securable to, for example, a lamp stay provided on a front fork of the bicycle. In the lamp case 41a, an electric light bulb 41b of about 2.4 W to serve as the headlight, and an on/off circuit 41c that turns on/off the electric light bulb 41b according to illumination therearound using an illumination sensor or the like are provided.

The tail light 42 has a tail light case 42a securable to, for example, a rear portion of the bicycle. In the tail light case 42a, an electric light bulb 42b of about 0.6 W to serve as the tail light is provided. The electric light bulb 42b is also turned on/off the on/off circuit 41c.

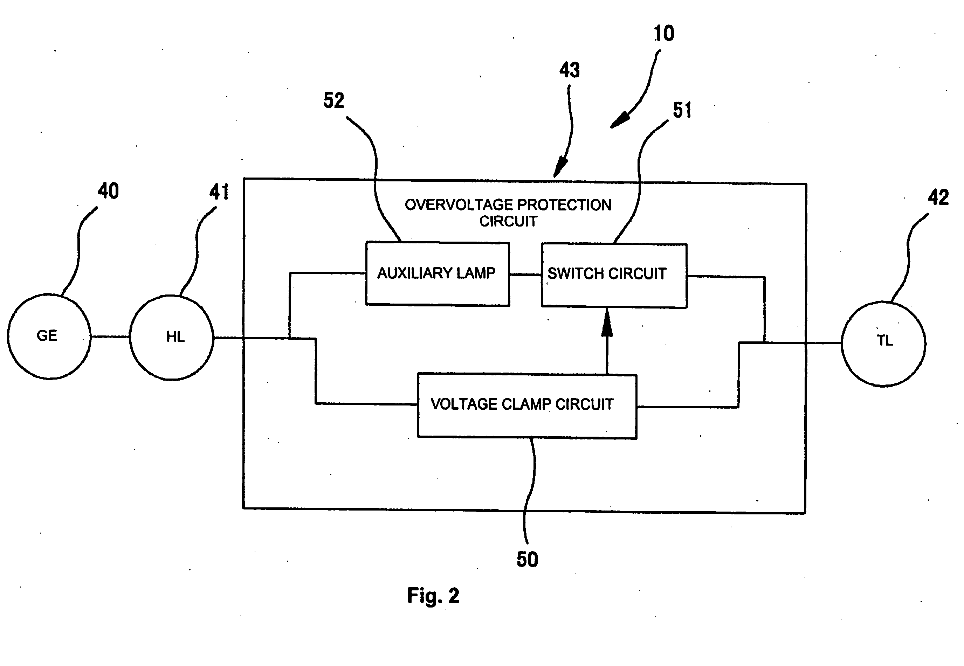

The overvoltage protection circuit 43 may be placed between the headlight 41 and the tail light 42, and preferably placed in the lamp case 41a. As shown in FIG. 2, the overvoltage protection circuit 43 includes a voltage clamp circuit 50 that clamps a voltage generated by the hub dynamo 40 to a first voltage V1 (for example, 7 to 12 volt), a switch circuit 51 that is turned on when a voltage equal to or higher than the first voltage V1 is supplied to the voltage clamp circuit 50 and that is turned off when a voltage lower than the first voltage V1 is supplied to the voltage clamp circuit 50, and an auxiliary lamp (an example of a lighting portion) 52 that is connected in parallel with the voltage clamp circuit 50 and lighted when the switch circuit 51 is turned on.

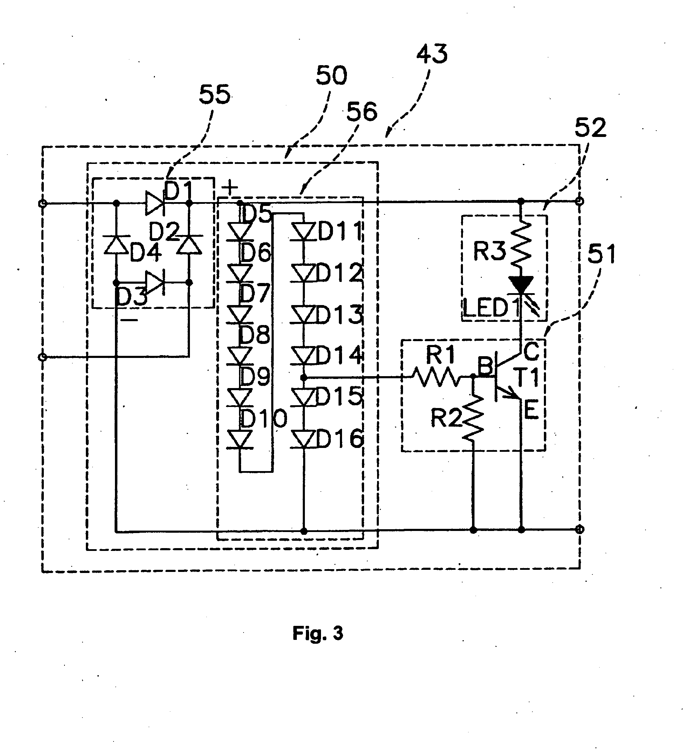

As shown in FIG. 3, the voltage clamp circuit 50 includes a rectifier circuit 55 for full-wave rectification of an AC output from the hub dynamo 40, and a diode circuit 56 connected in parallel with the rectifier circuit 55. The rectifier circuit 55 has four bridge-connected diodes D1 to D4. The diode circuit 56 has a plurality of (for example, 12) diodes Dc1 to Dc12 connected in parallel with the rectifier circuit 55. The diodes Dc1 to Dc12 are connected in series, an anode of the diode Dc1 is connected to a positive terminal of the rectifier circuit 55 (a node between a diode Dr1 and a diode Dr2), and a cathode of the diode Dc12 is connected to a negative terminal of the rectifier circuit 55 (a node between a diode Dr3 and a diode Dr4).

In the voltage clamp circuit 50 having such a configuration, a clamp voltage, that is, the first voltage V1 can be expressed as the following equation:

$$V1 = 2 \times Vrd + 12 \times Vcd$$

where Vrd is a forward voltage of each of the diodes Dr1 to Dr4 in the rectifier circuit 55, and Vcd is a forward voltage of each of the diodes Dc1 to Dc12 in the diode circuit 56.

When the forward voltage of each of the diodes Dr1 to Dr4 and Dc1 to Dc12 is, for example, 0.6 volt, the first voltage V1, that is, the clamp voltage is 8.4 volt.

The switch circuit 51 has, for example, an NPN bipolar transistor T1, and resistances R1 and R2 for adjusting a voltage (a base - emitter voltage) for turning on the transistor T1. A collector of the transistor T1 is connected to the auxiliary lamp 52, and an emitter is connected to the negative terminal of the rectifier circuit 55. The resistance R1 is connected to a node between a diode D14 and a diode D15 and a base of the transistor T1, and the resistance R2 is connected to the base of the transistor T1 and the negative terminal of the rectifier circuit 55. The transistor T1 of the switch circuit 51 is turned on when a voltage between the diode D15 and a diode D16 reaches, for example, 1.2 volt or higher, and the auxiliary lamp 52 is lighted. Specifically, when the forward voltage of each of the diodes Dc1 to Dc 12 is 0.6 volt, and the first voltage V1, that is, a voltage of 8.4 volt or higher from the hub dynamo 40 is applied to the overvoltage protection circuit 43, the switch circuit 51 is turned on.

The auxiliary lamp 52 functions as a position lamp that is placed near the electric light bulb 41b and allows the bicycle to be easily recognized by other persons. The auxiliary lamp 52 has a bias resistance R3 for adjusting the supplied voltage, and a power light emitting diode LED 1 having an anode connected to the bias resistance R3 and having an output of, for example, 0.5 W or higher.

In the overvoltage protection circuit 43 having such a configuration, when the voltage generated by the hub dynamo 40 is lower than the first voltage V1, and illumination reaches a predetermined value or lower, the on/off circuit 41c is turned on, and the headlight 41 and the tail light 42 are lighted. On the other hand, no current passes through the overvoltage protection circuit 43, and the auxiliary lamp 52 is not lighted.

When the bicycle travels at high speed with the illumination equal to or lower than the predetermined value, or the electric light bulb 41 b of the headlight 41 burns out, resulting in the voltage generated by the hub dynamo reaching the first voltage V1 or higher, a current passes through the overvoltage protection circuit 43, and the generated voltage is clamped to the first voltage V1. When the current passes through the overvoltage protection circuit 43, the switch circuit 51 is turned on, and the auxiliary lamp 52 is turned on. This prevents overvoltage from being applied to the headlight 41 and the tail light 42, thereby preventing the headlight 41 and the tail light 42 from burning out. Also, if the headlight 41 with high wattage burns out and overvoltage tries to pass through the tail light 42, the overvoltage protection circuit 43 clamps the voltage from the hub dynamo 40 to protect the tail light 42. When the current passes through the overvoltage protection circuit 43, the switch circuit 51 is turned on, and the auxiliary lamp 52 is lighted, thereby preventing reduction in recognition of the bicycle from other persons even if the headlight 41 burns out.

<Other embodiments>

(a) In the above described embodiment, the light emitting diode is used in the auxiliary lamp 52 as a lighting element, but the lighting element is not limited to the light emitting diode, and a general electric light bulb may be used.
(b) In the above described embodiment, the plurality of diodes connected in series are used as the voltage clamp circuit 50, but an element such as a Zener diode may be used for clamping.
(c) In the above described embodiment, the auxiliary lamp 52 as the position lamp is placed in the lamp case 41 a provided on the lamp stay of the front fork, but the position of the auxiliary lamp 52 and the position of the lamp case are not limited to those in the above described embodiment. For example, the auxiliary lamp 52 may be mounted to a handlebar of the bicycle so as to also serve as a warning lamp for a warning about burning out of the light, or the lamp case may be placed on the handlebar or an upper portion of the front wheel of the bicycle.

**Claims**

1. A bicycle overvoltage protection device (43) comprising:

    a voltage clamp circuit (50) that is adapted to clamp a voltage generated by a bicycle dynamo (40) that can supply electric power to a headlight (41) of a bicycle to a first voltage **characterized in that** a switch circuit (51), that can be is turned on when a voltage equal to or higher than said first voltage, is supplied to said voltage clamp circuit (50); and
    a lighting portion (52) that is connected in parallel with said voltage clamp circuit (50), and can be lighted when said switch circuit (51) is turned on.

2. The bicycle overvoltage protection device (43) according to claim 1, wherein said lighting portion (52) comprises a light emitting diode (LED1).

3. The bicycle overvoltage protection device (43) according to claim 1 or 2, wherein said first voltage is 7 to 12 volt.

4. The bicycle overvoltage protection device (43) according to any one of claims 1 to 3, wherein said voltage clamp circuit (50) includes a rectifier circuit (55) that can rectify an alternating current from said dynamo (40), and a plurality of diodes (D5 to D16) connected in series, the plurality of diodes (D5 to D 16) being connected with a positive terminal and a negative terminal of said rectifier circuit (55).

5. The bicycle overvoltage protection device (43) according to claim 4, wherein said switch circuit (51) is connected to a specific node of said plurality of diodes (D5 to D16).

6. The bicycle overvoltage protection device (43) according to claim 5, wherein said switch circuit (51) includes a transistor (T1) having a base (B) connected to said specific node, an emitter (E) connected to a lighting element, and a collector (C) connected to a negative terminal of said rectifier circuit (55).

## Patentansprüche

1. Überspannungsschutzvorrichtung (43) für ein Fahrrad, umfassend:

   eine Spannungsklemmschaltung (50), angepasst, eine Spannung, erzeugt durch einen Fahrraddynamo (40), der elektrische Leistung einem Vorderlicht (41) eines Fahrrads bereitstellen kann, bei einer ersten Spannung zu halten, **gekennzeichnet durch** einen Schaltkreis (51), der eingeschaltet werden kann, wenn eine Spannung, die gleich oder größer ist als die erste Spannung, der Spannungsklemmschaltung (50) zugeführt wird; und einen Lichtabschnitt (52), der parallel verbunden ist mit der Spannungsklemmschaltung (50) und leuchtbar ist, wenn der Schaltkreis (51) eingeschaltet wird.

2. Überspannungsschutzvorrichtung (43) für ein Fahrrad gemäß Anspruch 1, wobei der Lichtabschnitt (52) eine lichtemittierende Diode (LED 1) umfasst.

3. Überspannungsschutzvorrichtung (43) für ein Fahrrad gemäß Anspruch 1 oder 2, wobei die erste Spannung 7 bis 12 Volt ist.

4. Überspannungsschutzvorrichtung (43) für ein Fahrrad gemäß einem der Ansprüche 1 bis 3, wobei die Spannungsklemmschaltung (50) eine Gleichrichterschaltung (55) umfasst, die Wechselstrom von dem Dynamo (40) gleichrichten kann, und eine Vielzahl Dioden (D5 bis D16), verbunden in Reihe, wobei die Vielzahl Dioden (D5 bis D 16) mit einem positiven Terminal und einem negativen Terminal der Gleichrichterschaltung (55) verbunden ist.

5. Überspannungsschutzvorrichtung (43) für ein Fahrrad gemäß Anspruch 4, wobei der Schaltkreis (51) mit einem spezifischen Knoten der Vielzahl Dioden (D5 bis D16) verbunden ist.

6. Überspannungsschutzvorrichtung (43) für ein Fahrrad gemäß Anspruch 5, wobei der Schaltkreis (51) einen Transistor (T1) umfasst, aufweisend eine Basis (B), verbunden mit dem spezifischen Knoten, einen Emitter (E), verbunden mit einem Lichtelement, und einen Kollektor (C), verbunden mit einem negativen Terminal der Gleichrichterschaltung (55).

## Revendications

1. Dispositif de protection contre les surtensions pour bicyclette (43), comprenant :

   un circuit d'alignement de tension (50), qui est adapté pour aligner une tension générée par une dynamo de bicyclette (40), qui peut fournir une alimentation électrique à une lumière avant (41) d'une bicyclette à une première tension, **caractérisé en ce qu'**un circuit de commutation (51), qui peut être allumé lorsqu'une tension égale à ou supérieure à la première tension est fournie au circuit d'alignement de tension (50) ; et
   une partie d'éclairage (52), qui est connectée en parallèle au circuit stabilisateur de tension (50), et qui peut être éclairée lorsque ledit circuit de commutation (51) est allumé.

2. Dispositif de protection contre les surtensions pour bicyclette (43) selon la revendication 1, dans lequel la partie d'éclairage (52) comprend une diode électro-luminescente (LED1).

3. Dispositif de protection contre les surtensions pour bicyclette (43) selon la revendication 1 ou 2, dans lequel la première tension est de 7 à 12 Volts.

4. Dispositif de protection contre les surtensions pour bicyclette (43) selon l'une quelconque des revendications 1 à 3, dans lequel le circuit d'alignement de tension (50) comprend un circuit redresseur (55), qui peut redresser un courant alternatif en provenance de la dynamo (40), et une pluralité de diodes (D5 à D16) reliées en série, la pluralité de diodes (D5 à D16) étant reliée avec un terminal positif et un terminal négatif du circuit redresseur (55).

5. Dispositif de protection contre les surtensions pour bicyclette (43) selon la revendication 4, dans lequel le circuit de commutation (51) est relié à un noeud spécifique de la pluralité de diodes (D5 à D16).

6. Dispositif de protection contre les surtensions pour bicyclette (43) selon la revendication 5, dans lequel le circuit de commutation (51) comprend un transistor (T1) ayant une base (B) reliée au noeud spécifique, un émetteur (E) relié à un élément d'éclairage, et un collecteur (C) relié à un terminal négatif du circuit redresseur (55).

Fig. 1

EP 1 849 693 B1

**Fig. 2**

EP 1 849 693 B1

**Fig. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 9118797 U

**Non-patent literature cited in the description**

- Dealer Sales Manual. Shimano Bicycle Components, September 1996, 75